# EUROPEAN PATENT APPLICATION

(11) **EP 2 787 602 A1**
(43) Date of publication of application: **08.10.2014**
(21) Application number: 12853177.9
(22) Date of filing: 15.11.2012
(51) Int. Cl.: H02J 17/00

(54) **NON-CONTACT POWER TRANSMISSION DEVICE**

(30) Priority: 01.12.2011 JP 2011264020
(71) Applicant: Panasonic Corporation, Osaka 571-8501 (JP)
(72) Inventor: KITAMURA, Hiroyasu, Osaka, 540-6207 (JP)
(74) Representative: Grünecker, Kinkeldey, Stockmair & Schwanhäusser
(86) International application number: PCT/JP2012/007344
(87) International publication number: WO 2013/080467

(57) **Abstract**

A non-contact power transmission device (1), comprising a washbasin (10) including a primary coil (20), and an electric toothbrush (50) including a secondary coil (53). A central door (12) includes a third relay coil (23) that relays the flow of magnetic flux from the primary coil (20) to the secondary coil (53). The position of the third relay coil (23) relative to the primary coil (20) changes as a result of the opening and closing of the central door (12).

## Description

The present invention relates to a non-contact power transmission device including a power transmitter, which includes a primary coil, and a power receiver, which includes a secondary coil.

Patent document 1 describes a non-contact power transmission device that links the magnetic flux of a primary coil with a secondary coil to transfer power to the secondary coil. Current is supplied from the secondary coil to a power supplying circuit to charge a rechargeable battery.

### Patent Document 1: Japanese Patent No. 3416863

In a non-contact power transmission device, it is desirable that the power transmission distance be increased. The non-contact power transmission device of patent document 1 does not particularly consider increasing the power transmission device.

Accordingly, it is an object of the present invention to provide a non-contact power transmission device that allows for an increase in the power transmission distance.

A non-contact power transmission device according to the present invention is characterized by a power transmitter including a primary coil, a power receiver including a secondary coil, and a relay coil that allows for movement relative to the primary coil and the secondary coil.

Preferably, in the non-contact power transmission device, the relay coil is not connected to an electric load.

Preferably, in the non-contact power transmission device, the power transmitter is incorporated in a bathroom cabinet unit including a storage portion that allows for storage of the power receiver and a door portion that opens and closes the storage portion, and the relay coil is incorporated in the door portion.

Preferably, the non-contact power transmission device includes a position detector that detects a position of the door portion relative to the storage portion of the bathroom cabinet unit.

Preferably, in the non-contact power transmission device, the door portion includes a door that is movable relative to the storage portion, and the non-contact power transmission device includes a magnetic body located between the door and the relay coil.

Preferably, in the non-contact power transmission device, the power transmitter includes a control unit that controls power supplied to the primary coil, and the control unit supplies the primary coil with a larger power when the door portion closes the storage portion than when the door portion opens the storage portion.

A case of a power receiver corresponding to a power transmitter of a non-contact power transmission device according to the present invention includes a relay coil. The case is formed to allow for storage or holding of the power receiver and to allow for movement relative to the power transmitter.

The present invention provides a non-contact power transmission device that allows for an increase in the power transmission distance.
Fig. 1A is a schematic perspective view showing when doors are closed in a bathroom cabinet unit to which a non-contact power transmission device according to a first embodiment of the present invention is applied, and Fig. 1B is a schematic perspective view showing when the doors of the bathroom cabinet unit are open.
Fig. 2 is a schematic partial cross-sectional view of an electric toothbrush to which the non-contact power transmission device according to the first embodiment of the present invention is applied.
Fig. 3 is a schematic circuit diagram of the non-contact power transmission device according to the first embodiment of the present invention.
Figs. 4A and 4B are schematic diagrams showing the relationship of a primary coil, a third relay coil, and an electric toothbrush in the bathroom cabinet unit to which the non-contact power transmission device according to the first embodiment of the present invention is applied.
Fig. 5 is a schematic perspective view showing a portion of a bathroom cabinet unit to which a non-contact power transmission device according to a second embodiment of the present invention is applied.
Fig. 6 is a schematic diagram showing the positional relationship of a primary coil, a relay coil, an auxiliary coil, and a secondary coil in the non-contact power transmission device according to the second embodiment of the present invention.
Fig. 7A is a schematic side view of a storage case to which a non-contact power transmission device according to a third embodiment of the present invention is applied, and Fig. 7B is a schematic front view of the storage case.
Fig. 8 is a schematic cross-sectional view showing a portion and surrounding of an electric toothbrush to which the non-contact power transmission device according to the third embodiment of the present invention is applied.
Fig. 9A is a plan view of a primary coil and a magnetic sheet in a non-contact power transmission device according to a further embodiment of the present invention, and Fig. 9B is a cross-sectional view taken along the A-A plane in Fig. 9A.

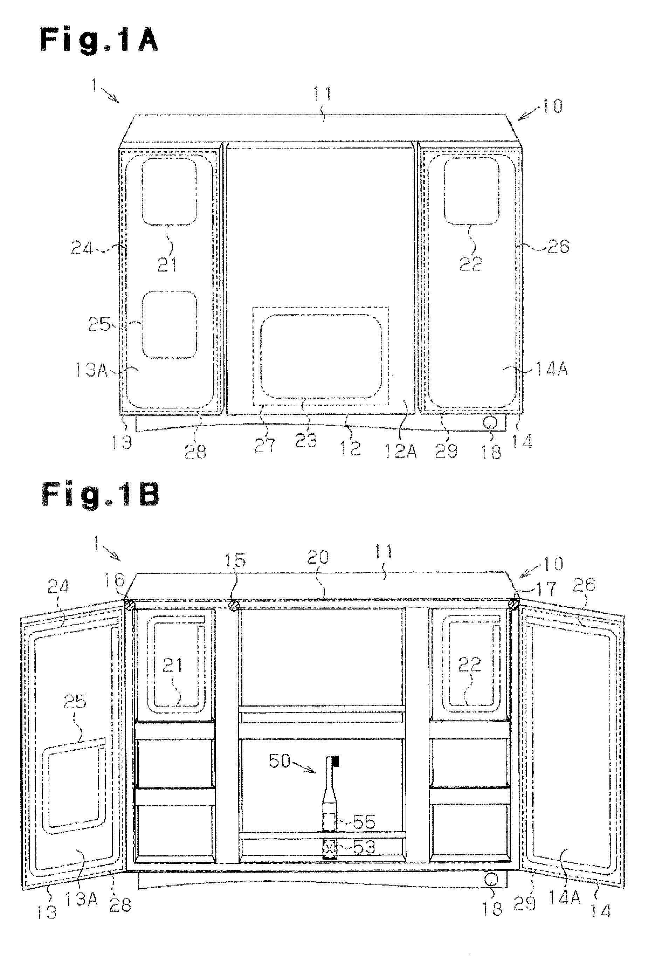

The structure of a non-contact power transmission device 1 according to a first embodiment of the present invention will now be described with reference to Fig. 1.

The non-contact power transmission device 1 includes a bathroom cabinet unit 10, which includes a primary coil 20, and an electric toothbrush 50, which includes a secondary coil 53. The primary coil 20 of the bathroom cabinet unit 10 transmits power to a rechargeable battery 55 of the electric toothbrush 50 through electromagnetic induction. That is, a "power transmitter" of the non-contact power transmission device is incorporated in the bathroom cabinet unit 10, and a "power receiver" is incorporated in the electric toothbrush 50.

The structure of the bathroom cabinet unit 10 when doors are closed will now be described with reference to Fig. 1A.

The bathroom cabinet unit 10 includes a cabinet 11, which allows for the storage of toiletries, a central door 12, which opens and closes a central portion of the cabinet 11, a left door 13, which opens and closes a left portion of the cabinet 11, and a right door 14, which opens and closes a right portion of the cabinet 11. The cabinet 11 corresponds to a "storage portion." The central door 12, the left door 13, and the right door 14 correspond to a "door portion."

The structure of the bathroom cabinet unit 10 when the doors are open will now be described with reference to Fig. 1B. In Fig. 1B, the central portion of the cabinet 11 is open, and the central door 12 is not shown.

The cabinet 11 includes the primary coil 20, which generates magnetic flux when supplied with power, and a first relay coil 21 and a second relay coil 22, which relay the magnetic flux of the primary coil 20. Further, the cabinet 11 includes a central open-close sensor 15, which detects an open-close condition of the central door 12, a left open-close sensor 16, which detects an open-close condition of the left door 13, a right open-close sensor 17, which detects an open-close condition of the right door 14, and a power switch 18, which switches power supplying conditions of the primary coil 20. The central open-close sensor 15, the left open-close sensor 16, and the right open-close sensor 17 correspond to "position detectors."

The primary coil 20 is laid out along the peripheral portion of the cabinet 11 (front portion of tetragonal frame). The first relay coil 21 is located inward from the primary coil 20 at the left upper portion of the cabinet 11. The second relay coil 22 is located inward from the primary coil 20 at the right upper portion of the cabinet 11.

The central door 12 includes a door body 12A, a third relay coil 23, and a central magnetic sheet 27. The door body 12A is movable relative to the cabinet 11. The third relay coil 23 is located at the lower portion of the door body 12A. The central magnetic sheet 27 covers the front side of the third relay coil 23. That is, the central magnetic sheet 27 is located between the third relay coil 23 and the door body 12A. The sides of the central magnetic sheet 27 are larger than the sides of the third relay coil 23.

The left door 13 includes a door body 13A, a fourth relay coil 24, a fifth relay coil 25, and a left magnetic sheet 28. The door body 13A is movable relative to the cabinet 11. The fourth relay coil 24 is laid out along the peripheral portion of the door body 13A. The fifth relay coil 25 is located inward from fourth relay coil 24 at the lower portion of the left door 13. The left magnetic sheet 28 covers the front sides of the fourth relay coil 24 and the fifth relay coil 25. That is, the left magnetic sheet 28 is located between the fourth relay coil 24 and the fifth relay coil 25. The sides of the left magnetic sheet 28 are larger than the sides of the fifth relay coil 25.

The right door 14 includes a door body 14A, a sixth relay coil 26, and a right magnetic sheet 29. The door body 14A is movable relative to the cabinet 11. The sixth relay coil 26 is laid out along the peripheral portion of the door body 14A. The right magnetic sheet 29 covers the front side of the sixth relay coil 26. That is, the right magnetic sheet 29 is located between the sixth relay coil 26 and the door body 14A. The sides of the right magnetic sheet 29 are larger than the sides of the sixth relay coil 26. The door bodies 12A, 13A, and 14A correspond to "doors." Further, the third relay coil 23, the fourth relay coil 24, the fifth relay coil 25, and the sixth relay coil 26 correspond to "relay coils." The central magnetic sheet 27, the left magnetic sheet 28, and the right magnetic sheet 29 correspond to "magnetic bodies."

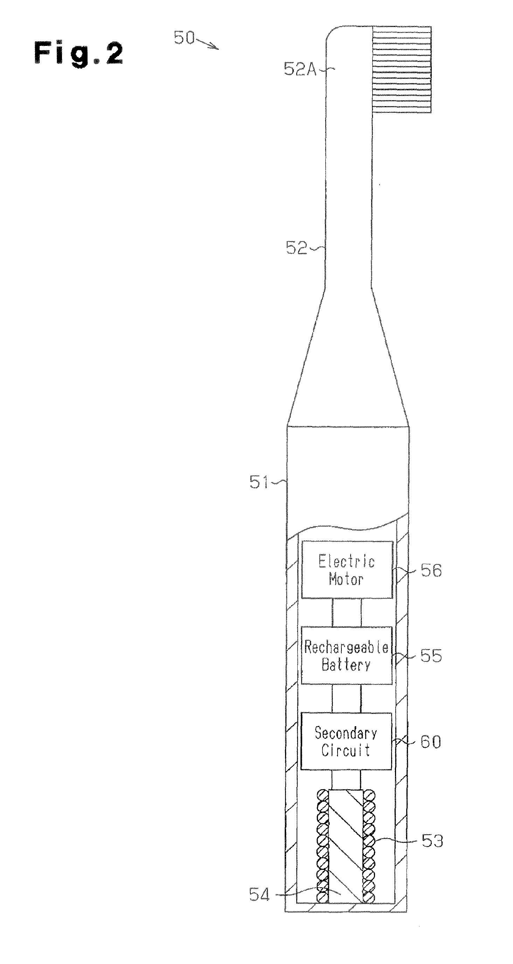

The primary coil 20 is a planar coil that is tetragonal as viewed from above. The relay coils 21 to 26 are also planar coils that are tetragonal as viewed from above. In Fig. 1, the illustrations of the primary coil 20 and the relay coils 21 to 26 are simplified, and the coils are shown in Fig. 1 with fewer windings than actual. In the same manner as Fig. 1, the coils shown in Fig. 2 and the following drawings are illustrated with fewer windings than actual.

The relationship of the relay coils 21 to 26 will now be described.
(A) The sides of the first relay coil 21, the second relay coil 22, and the fifth relay coil 25 are of the same size.
(B) The sides of the fourth relay coil 24 and the sixth relay coil 26 are of the same size.
(C) The sides of the first relay coil 21, the second relay coil 22, and the fifth relay coil 25 have smaller sizes than the sides of the fourth relay coil 24 an the sixth relay coil 26.
(D) Conductive wires of the relay coils 21 to 26 have equal diameters.
(E) The sides of the relay coils 21 to 26 have smaller sizes than the sides of the primary coil 20.

The positional relationship of the primary coil 20 and the relay coils 21 to 26 will now be described.

The position of the first relay coil 21 and the position of the second relay coil 22 are fixed relative to the primary coil 20. The position of the third relay coil 23, the position of the fourth relay coil 24, the position of the fifth relay coil 25, and the position of the sixth relay coil 26 vary relative to the primary coil 20.

The position of the third relay coil 23 relative to the primary coil 20 varies in accordance with the position of the central door 12 relative to the cabinet 11, that is, the open amount of the central door 12 relative to the cabinet 11 (hereinafter referred to as the "central door open amount").

When the central door 12 is closed, that is, when the central door open amount is "0", the distance is smallest between the primary coil 20 and the third relay coil 23. In contrast, when the central door 12 is open, that is, when the central door open amount is greater than "0", the distance increases between the primary coil 20 and the third relay coil 23 as the central door open amount increases.

The positions of the fourth relay coil 24 and the fifth relay coil 25 relative to the primary coil 20 vary in accordance with the position of the left door 13 relative to the cabinet 11, that is, the open amount of the left door 13 relative to the cabinet 11 (hereinafter referred to as the "left door open amount").

When the left door 13 is closed, that is, when the left door open amount is "0", the distance is smallest between the primary coil 20 and each of the fourth relay coil 24 and the fifth relay coil 25. In contrast, when the left door 13 is open, that is, when the left door open amount is greater than "0", the distance increases between the primary coil 20 and each of the fourth relay coil 24 and the fifth relay coil 25 as the left door open amount increases.

The position of the sixth relay coil 26 relative to the primary coil 20 varies in accordance with the position of the right door 14 relative to the cabinet 11, that is, the open amount of the right door 14 relative to the cabinet 11 (hereinafter referred to as the "right door open amount").

When the right door 14 is closed, that is, when the right door open amount is "0", the distance is smallest between the primary coil 20 and the sixth relay coil 26. In contrast, when the right door 14 is open, that is, when the right door open amount is greater than "0", the distance increases between the primary coil 20 and the sixth relay coil 26 as the right door open amount increases.

The structure of the electric toothbrush 50 will now be described with reference to Fig. 2.

The electric toothbrush 50 includes a main body case 51, which is held by a user, and an attachment 52, which may be attached to and removed from the main body case 51. The attachment 52 includes a brush 52A in which bundles of bristles are arranged. The brush 52A is located at the distal portion of the attachment 52.

The main body case 51 includes a secondary coil 53 linked with the magnetic flux of the primary coil 20 shown in Fig. 1, a rod-shaped core 54 formed from a magnetic material, a rechargeable battery 55 functioning as a power supply of the electric toothbrush 50, and an electric motor 56 that oscillates the attachment 52. The secondary coil 53, the core 54, the rechargeable battery 55, and the electric motor 56 are located inside the main body case 51.

The secondary coil 53 is a cylindrical coil that is circular as viewed from above. That is, a plurality of circular portions (loops) forming the secondary coil 53 are stacked along the longitudinal direction of the electric toothbrush 50. The conductive wire of the secondary coil 53 has a smaller diameter than the conductive wire of the primary coil 20. The core 54 is arranged in a hollow portion of the secondary coil 53.

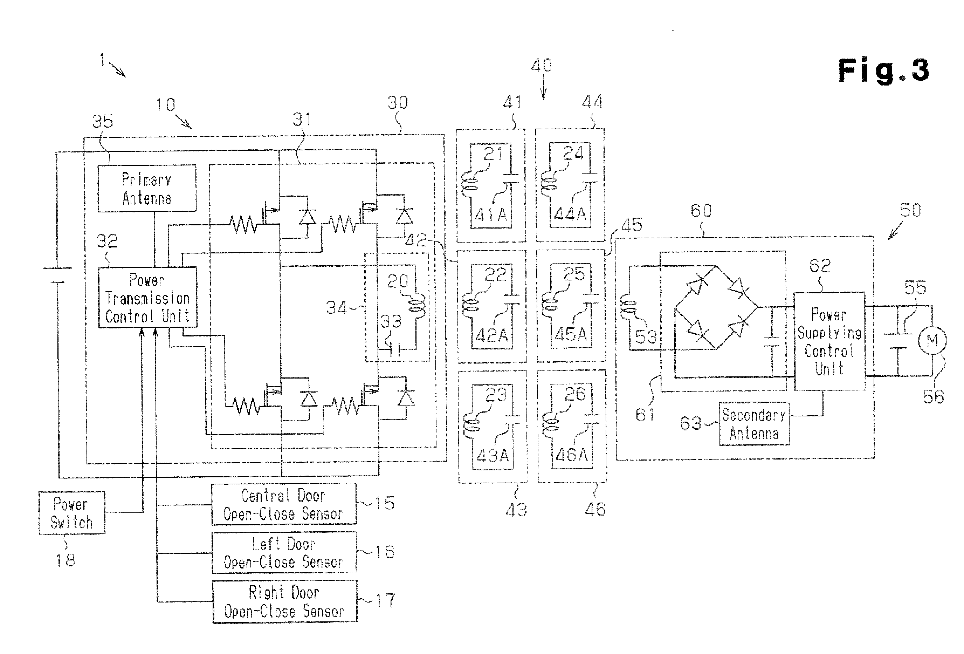

The circuit configuration of the non-contact power transmission device 1 will now be described with reference to Fig. 3.

The bathroom cabinet unit 10 includes a primary circuit 30, which controls the power supplied to the primary coil 20, and a relay circuit 40, which relays the magnetic flux of the primary coil 20 to the secondary coil 53. The electric toothbrush 50 includes a secondary circuit 60, which controls the power transmitted from the primary circuit 30.

The primary circuit 30 includes a transmission circuit 31 that supplies alternating power to the primary coil 20, a power transmission control unit 32 that controls the transmission circuit 31, the primary coil 20 connected to the transmission circuit 31, and a capacitor 33 connected in series to the primary coil 20. Further, the primary circuit 30 includes a primary antenna 35 that transmits and receives signals to and from the secondary circuit 60. The transmission circuit 31 includes a plurality of transistors connected to the primary coil 20. The primary coil 20 and the capacitor 33 form a resonance circuit 34. The power transmission control unit 32 corresponds to a "control unit."

The power transmission control unit 32 repetitively transmits in a predetermined cycle a voltage signal (hereinafter referred to as the "response request signal") from the primary antenna 35 to a transmission destination such as the electric toothbrush 50. The response request signal, which requests the device of the transmission destination to send a response, is generated from the alternating power supplied to the primary coil 20.

The relay circuit 40 includes a first relay circuit 41, a second relay circuit 42, and a third relay circuit 43. The first relay circuit 41 includes the first relay coil 21 and a capacitor 41 A. The second relay circuit 42 includes the second relay coil 22 and a capacitor 42A. The third relay circuit 43 includes the third relay coil 23 and a capacitor 43A. Further, the relay circuit 40 includes a fourth relay circuit 44, a fifth relay circuit 45, and a sixth relay circuit 46. The fourth relay circuit 44 includes the fourth relay coil 24 and a capacitor 44A. The fifth relay circuit 45 includes the fifth relay coil 25 and a capacitor 45A. The sixth relay circuit 46 includes the sixth relay coil 26 and a capacitor 46A. Each of the relay circuits 41 to 46 forms a resonance circuit with the relay coil and the capacitor. The capacitors 41A to 46A each have a capacitance that is set so that the resonance frequency of the corresponding relay circuits 41 to 46 conforms to the reference frequency FK.

The relay circuits 41 to 46 are not electrically connected to one another. Further, the relay circuits 41 to 46 are not electrically connected to the primary circuit 30 and the secondary circuit. Thus, in comparison with when relay circuits are electrically connected to one another and/or electrically connected to a primary circuit and a secondary circuit, impedance is decreased in the relay circuits 41 to 46 and the relay coils 21 to 25.

The secondary circuit 60 includes a secondary coil 53 that forms a magnetic circuit with the primary coil 20, a rectification circuit 61 that rectifies the alternating power generated at the secondary coil 53 to direct current power, and a power supplying control unit 62 that controls the direct current power supplied to the rechargeable battery 55. Further, the secondary circuit 60 includes a secondary antenna 63 that transmits and receives signals to and from the primary circuit 30.

The rectification circuit 61 includes a rectification bridge, which has four diodes, and a capacitor, which smoothens the current passing through the rectification bridge. The rectification circuit 61, the secondary coil 53, and the power supplying control unit 62 are electrically connected to one another.

The power supplying control unit 62 includes a DC-DC converter (not shown), which controls the voltage of the direct current power rectified by the rectification circuit 61, and a transistor (not shown), which starts and stops the supply of direct current power to the rechargeable battery 55. The power supplying control unit 62 and the rechargeable battery 55 are electrically connected to each other.

The power supplying control unit 62 executes voltage control and power supplying control.

The voltage control uses the DC-DC converter to vary the voltage of the direct current power in accordance with the state of charge of the rechargeable battery 55. The power supplying control varies the amount of power supplied to the rechargeable battery 55 in accordance with the state of charge of the rechargeable battery 55.

When the charging of the rechargeable battery 55 has not been completed, the power supplying control keeps the transistors activated, that is, keeps supplying direct current power to the rechargeable battery 55. When the rechargeable battery 55 is fully charged, the power supplying control keeps the transistors deactivated. A response acknowledgement signal is provided by the alternating power supplied to the secondary coil 53.

When receiving a response request signal from the power transmission control unit 32 through the secondary antenna 63, the power supplying control unit 62 transmits to the power transmission control unit 32 a voltage signal (hereinafter referred to as the "response acknowledgement signal") indicating that the power supplying control unit 62 has received the response request signal. When receiving the response acknowledgement signal, the power transmission control unit 32 determines that the electric toothbrush 50 is stored in the cabinet 11.

The operation of each of the open-close sensors 15 to 17 will now be described with reference to Fig. 1.

The central open-close sensor 15 is activated when the central door 12 is closed and the central open-close sensor 15 comes into contact with the central door 12. Further, the central open-close sensor 15 is deactivated when the central door 12 is open and the central open-close sensor 15 is separated from the central door 12.

The left open-close sensor 16 is activated when the left door 13 is closed and the left open-close sensor 16 comes into contact with the left door 13. Further, the left open-close sensor 16 is deactivated when the left door 13 is open and the left open-close sensor 16 is separated from the left door 13.

The right open-close sensor 17 is activated when the right door 14 is closed and the right open-close sensor 17 comes into contact with the right door 14. Further, the right open-close sensor 17 is deactivated when the right door 14 is open and the right open-close sensor 17 is separated from the right door 14.

The central open-close sensor 15, the left open-close sensor 16, and the right open-close sensor 17 each transmit a signal corresponding to the activation or deactivation to the power transmission control unit 32. The power transmission control unit 32 receives a signal from each of the sensors 15 to 17 and detects the opening and closing of each of the doors 12 to 14 from the received signals.

The operation of the power switch 18 will now be described with reference to Figs. 1 to 3.

When a user operates and activates the power switch 18, the power switch 18 transmits an activation signal, indicating that the power switch 18 is activated, to the power transmission control unit 32. When the user operates and deactivates the power switch 18, the power switch 18 transmits a deactivation signal, indicating that the power switch 18 is deactivated, to the power transmission control unit 32. The power transmission control unit 32 receives an activation signal or a deactivation signal from the power switch 18 and controls the energizing of the primary coil 20 based on the received activation signal or deactivation signal.

A power transmission method of the non-contact power transmission device 1 will now be described with reference to Fig. 3. The transmission of the response request signal from the primary coil 20 to the secondary coil 53 is similar to the following power transmission method and will not be described.
(A) The power transmission control unit 32 of the bathroom cabinet unit 10 controls the transmission circuit 31 to supply the primary coil 20 with alternating power of the reference frequency FK.
(B) The primary coil 20 generates alternating magnetic flux when supplied with the alternating power.
(C) Each of the relay coils 21 to 26 is linked with the alternating magnetic flux of the primary coil 20 to generate alternating power having the reference frequency FK and alternating magnetic flux. The alternating power and the alternating magnetic flux generated at each of the relay coils is greater than the alternating power and the alternating magnetic flux generated when each of the relay coils is connected to an electric load.
(D) The secondary coil 53 is linked with the alternating magnetic flux of the primary coil 20 and linked with the alternating magnetic flux of at least one of the relay coils 21 to 26 to generate alternating power.
(E) The rectification circuit 61 smoothens the alternating power of the secondary coil 53 and converts the alternating power to direct current power.
(F) The power supplying control unit 62 supplies the direct current power from the rectification circuit 61 to the rechargeable battery 55.

The contents of the control executed by the power transmission control unit 32 will now be described.
(A) The power transmission control unit 32 supplies the primary coil 20 with power when detecting that one of the doors 12 to 14 is open based on signals received from the open-close sensors 15 to 17 and, at the same time, detecting that the power switch 18 is activated based on an activation signal received from the power switch 18. This transmits power from the primary coil 20 to the electric toothbrush 50. The power transmission control unit 32 executes control so that the amount of power supplied to the primary coil 20 becomes less than the amount of power supplied to the primary coil 20 in step (A).
(B) The power transmission control unit 32 does not supply the primary coil 20 with power when detecting that one of the doors 12 to 14 is open based on signals received from the open-close sensors 15 to 17 and, at the same time, detecting that the power switch 18 is deactivated based on a deactivation signal received from the power switch 18.
(C) The power transmission control unit 32 starts charging the rechargeable battery 55 of the electric toothbrush 50 when detecting that the doors 12 to 14 of Fig. 1 are closed based on signals received from the open-close sensors 15 to 17 and, at the same time, detecting that the electric toothbrush 50 is located in the cabinet 11 of Fig. 1 based on a response acknowledgement signal received from the electric toothbrush 50. Then, the power transmission control unit 32 stops charging the rechargeable battery 55 when receiving a signal from the electric toothbrush 50 indicating that charging has been completed. Further, when the doors 12 to 14 are closed, the power transmission control unit 32 supplies the primary coil 80 with power that is greater than the power when the doors 12 to 14 are open.
(D) The power transmission control unit 32 stops supplying the primary coil 20 with power, which has been supplied based on an activation signal from the power switch 18, when detecting that the doors 12 to 14 are all closed based on signals received from the open-close sensors 15 to 17. That is, when the doors 12 to 14 are all closed, the transmission of power to the electric toothbrush 50 cannot be started even when the power switch 18 is operated.

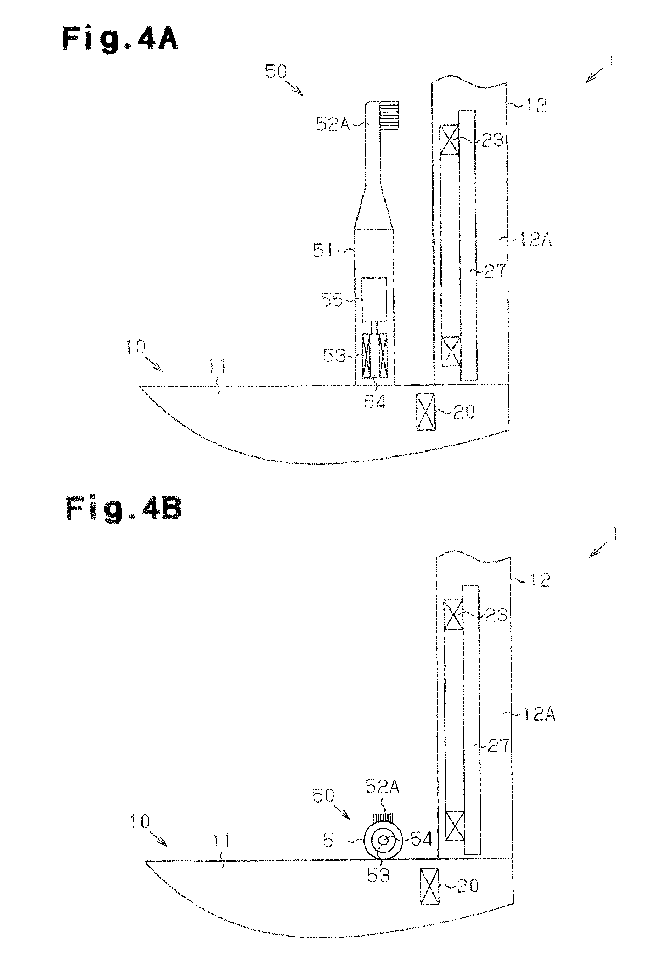

The operation of the non-contact power transmission device 1 will now be described with reference to Fig. 4. As shown in Fig. 4A, the electric toothbrush 50 is in an "upright position" when set upright. As shown in Fig. 4B, the electric toothbrush 50 is in a "horizontal position" when set horizontally. The portion of the third relay coil 23 parallel to the longitudinal direction of the electric toothbrush 50 when the electric toothbrush 50 is in the upright condition is referred to as the "vertical portion."

When the electric toothbrush 50 is in the upright position, the magnetic flux of the primary coil 20 is linked with the secondary coil 53 and the third relay coil 23. The magnetic flux of the third relay coil 23 is linked with the secondary coil 53. The magnetic flux of the primary coil 20 and the magnetic flux of the third relay coil 23 charge the rechargeable battery 55.

When the electric toothbrush 50 is in the horizontal position, the magnetic flux of the primary coil 20 is linked with the third relay coil 23 and substantially not linked with the secondary coil 53. The magnetic flux at the vertical portion of the third relay coil 23 is linked with the secondary coil 53. Thus, the magnetic flux of the third relay coil 23 charges the rechargeable battery 55. That is, the rechargeable battery 55 is substantially not charged by the magnetic flux of the primary coil 20.

The non-contact power transmission device 1 of the first embodiment has the advantages described below.
(1) The bathroom cabinet unit 10 includes the relay coils 21 to 26. This structure allows the power transmission distance to be increased between primary coil 20 of the bathroom cabinet unit 10 and the secondary coil 53 of the electric toothbrush 50 in comparison to a bathroom cabinet unit that does not include a relay coil.
(2) The magnetic flux of the third relay coil 23 links with the secondary coil 53. This allows the rechargeable battery 55 of the electric toothbrush 50 to be efficiently charged regardless of whether the electric toothbrush 50 is set in the upright position or the horizontal position. Thus, the degree of freedom for the position of the electric toothbrush 50 is increased when charging the electric toothbrush 50.
(3) The bathroom cabinet unit 10 includes the third relay coil 23 in the central door 12, the fourth relay coil 24 and the fifth relay coil 25 in the left door 13, and the sixth relay coil 26 in the right door 14. This structure allows the rechargeable battery 55 of the electric toothbrush 50 to be efficiently charged when the electric toothbrush 50 is located at a portion corresponding to the left door 13 and right door 14 of the cabinet 11 regardless of whether the electric toothbrush 50 is set in the upright position or the horizontal position. Thus, the degree of freedom for the location of the electric toothbrush 50 relative to the bathroom cabinet unit 10 is increased.
(4) The bathroom cabinet unit 10 includes the central magnetic sheet 27 that covers the front side of the third relay coil 23, the left magnetic sheet 28 that covers the front sides of the fourth relay coil 24 and the fifth relay coils 25, and the right magnetic sheet 29 that covers the front side of the sixth relay coil 26. This structure limits magnetic flux leakage from each of the relay coils 23 to 26 toward the front of the bathroom cabinet unit 10.
(5) The relay coils 21 to 26 are not connected to the primary circuit 30 and the secondary circuit 60. Further, the relay circuits 41 to 46 are not connected to one another. In this structure, the linkage of each of the relay coils 21 to 26 with the primary coil 20 generates current that is larger than when each of the relay coils 21 is connected to the primary circuit 30 or the secondary circuit 60 and when any two of the relay circuits 41 to 46 are connected to each other.

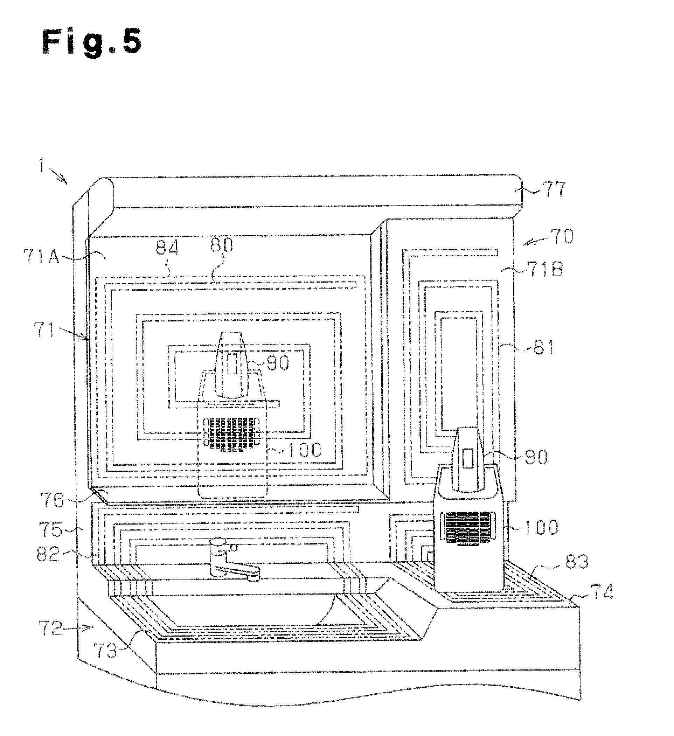

Fig. 5 shows a second embodiment of the non-contact power transmission device 1. The second embodiment of the non-contact power transmission device 1 mainly differs from the non-contact power transmission device 1 of the first embodiment shown in Fig. 1 in the points that will now be described. The bathroom cabinet unit 10 of the first embodiment includes the relay coils 23 to 26 of which positions may be varied relative to the primary coil 20. Further, in the non-contact power transmission device 1 of the first embodiment, the power receiver is incorporated in the electric toothbrush 50. In the second embodiment of the non-contact power transmission device 1, a relay coil 101 of which position may be varied relative to the primary coil 20 is included in a device that differs from a bathroom cabinet unit 70. Further, in the second embodiment of the non-contact power transmission device 1, the power receiver is incorporated in an electric shaver 90. Differences of the non-contact power transmission device 1 from the non-contact power transmission device 1 of the first embodiment will now be described in detail. Same reference numerals are given to those components that are the same as the corresponding components of the first embodiment. Such components will not be described.

The non-contact power transmission device 1 includes a bathroom cabinet unit 70, the electric shaver 90, and a cleaning device 100. The structure of the bathroom cabinet unit 70 differs from the bathroom cabinet unit 10 of the first embodiment. The electric shaver 90 includes the secondary coil 53. The cleaning device 100 cleans the electric shaver 90. The "power transmitter" of the non-contact power transmission device is incorporated in the bathroom cabinet unit 70 and the "power receiver" is incorporated in the electric shaver 90.

The bathroom cabinet unit 70 includes mirrors 71 forming an upper portion of the bathroom cabinet unit 70, a shelf 76, lighting 77, a counter 72 forming a lower portion of the bathroom cabinet unit 70, and the primary circuit 30 of Fig. 3. The mirrors 71 include a left mirror 71A and a right mirror 71 B. The counter 72 includes a sink 73, a countertop 74 on which the cleaning device 100 or the like may be set, and a support 75 that supports the mirrors 71. The shelf 76 is formed by a plate on which the cleaning device 100 or the like may be set. Further, the shelf 76 is located at the lower end of the left mirror 71 A.

The left mirror 71A includes a primary coil 80 and a magnetic sheet 84. The right mirror 71B includes a first relay coil 81. The sink 73 includes a second relay coil 82. The countertop 74 includes a third relay coil 83.

The primary coil 80 is a planar coil that is tetragonal as viewed from above. The first relay coil 81 is a planar coil that is tetragonal as viewed from above. The second relay coil 82 is formed in the sink 73 and the support 75 and shaped to extend along the surfaces of the sink 73 and the support 75. The third relay coil 83 is formed in the countertop 74 and the support 75 and shaped to extend along the surfaces of the countertop 74 and the support 75.

The conductive wires of the primary coil 80, the first relay coil 81, the second relay coil 82, and the third relay coil 83 have the same diameter. The sides of the magnetic sheet 84 are longer than the sides of the primary coil 80. The relay coils 81 to 83 have the same number of windings. The number of windings in each of the relay coils 81 to 83 is greater than the number of windings of the primary coil 80.

The second relay coil 82 is bent at the portion connecting the sink 73 and the support 75. Thus, the direction of the magnetic flux generated at the portion of the second relay coil 82 corresponding to the sink 73 differs from the direction of the magnetic flux generated at the portion of the second relay coil 82 corresponding to the support 75.

The third relay coil 83 is bent at the portion connecting the countertop 74 and the support 75. Thus, the direction of the magnetic flux generated at the portion of the third relay coil 83 corresponding to the countertop 74 differs from the direction of the magnetic flux generated at the portion of the third relay coil 83 corresponding to the support 75.

The relay coils 81 to 83 are not electrically connected to one another and not electrically connected to the primary circuit 30 and the secondary circuit 60 of Fig. 3. This decreases the impedance in each of the relay coils 81 to 83 compared to when relay coils are connected to each other and/or electrically connected to a primary circuit and a secondary circuit.

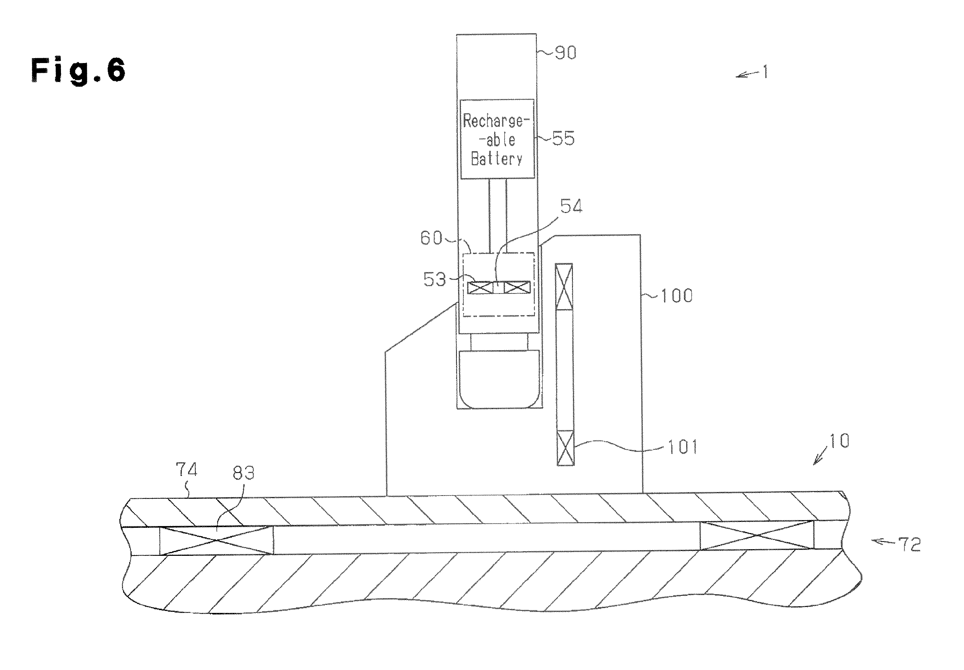

As shown in Fig. 6, in the same manner as the electric toothbrush 50 of the first embodiment, the electric shaver 90 includes the secondary coil 53, the core 54, the secondary circuit 60, and the rechargeable battery 55. Further, the secondary coil 53 is a planar coil.

The cleaning device 100 has a size that allows for arrangement on the countertop 74 and the shelf 76. Further, the cleaning device 100 is formed to allow for the position relative to the primary coil 80 to be varied on the bathroom cabinet unit 70. That is, the cleaning device 100 is formed so that the user can hold the cleaning device 100 during normal use.

The cleaning device 100 includes the relay coil 101. The relay coil 101 is a planar coil that is tetragonal as viewed from above. The relay coil 101 is orthogonal to the axis of the third relay coil 83. The relay coil 101 has a diameter that is smaller than the size of each side of the primary coil 80 and the size of each side of the relay coils 81 to 83.

The relay coil 101 is connected in series to a capacitor (not shown). The relay coil 101 and the capacitor form a resonance circuit. The capacitor has a capacitance that is set so that the resonance frequency of the resonance circuit conforms to the reference frequency FK. The cleaning device 100 corresponds to a "case including a relay coil that relays the flow of magnetic flux from the primary coil of the power transmitter in the non-contact power transmission device to the secondary coil of the power receiver."

The relay coil 101 is not connected to the primary circuit 30 of the bathroom cabinet unit 70 and the secondary circuit 60 of the electric shaver 90. Further, the relay coil 101 is not electrically connected to other electric circuits (not shown) of the relay coil 101. This decreases the impedance of the relay coil 101 as compared to when the relay coil 101 is electrically connected to the primary circuit 30 or the secondary circuit 60 and when the relay coil 101 is electrically connected to another electric circuit of the cleaning device 100.

A power transmission method of the non-contact power transmission device 1 will now be described with reference to Figs. 3 and 5. The method for supplying power from the secondary coil 53 of the electric shaver 90 to the rechargeable battery 55 is similar to the first embodiment and will not be described.
(A) The power transmission control unit 32 of the bathroom cabinet unit 70 controls the transmission circuit 31 to supply the primary coil 80 with alternating power of the reference frequency FK.
(B) The primary coil 80 generates alternating magnetic flux when supplied with the alternating power.
(C) The first relay coil 81 and the second relay coil 82 are linked with the alternating magnetic flux of the primary coil 80 to generate alternating power having the reference frequency FK and alternating magnetic flux.
(D) The third relay coil 83 is linked with the alternating magnetic flux of the first relay coil 81 and the second relay coil 82 to generate alternating power of the reference frequency FK and alternating magnetic flux.
(E) The relay coil 101 of the cleaning device 100 is linked with the alternating magnetic flux of the third relay coil 83 to generate alternating power of the reference frequency FK and alternating magnetic flux.
(F) The secondary coil 53 of the electric shaver 90 is linked with the alternating magnetic flux of the third relay coil 83 to generate alternating power of the reference frequency FK and alternating magnetic flux.

A power transmission method of the non-contact power transmission device 1 when the cleaning device 100 and the electric shaver 90 are set on the shelf 76 will now be described. The generation of the alternating power and the alternating magnetic flux from the primary coil 80 to each of the relay coils 81 to 83 is the same as the power transmission method described above. Thus, only the differences will be described below, and identical parts of the power transmission method will not be described.

The alternating magnetic flux of the primary coil 80 is linked with the relay coil 101 of the cleaning device 100. The alternating magnetic flux of the first relay coil 81 and the alternating magnetic flux of the second relay coil 82 are linked with the relay coil 101 of the cleaning device 100.

In this manner, the relay coil 101 of the cleaning device 100 is directly linked with the primary coil 80. This increases the magnetic efficiency between the primary coil 80 and the secondary coil 53 compared to when the cleaning device 100 and the electric shaver 90 are set on the countertop 74.

In addition to advantages (1), (2), and (5) of the non-contact power transmission device 1 of the first embodiment, the second embodiment of the non-contact power transmission device 1 has the following advantage.
(6) The cleaning device 100 includes the relay coil 101. This structure increases the amount of magnetic flux of the primary coil 80 linked with the secondary coil 53 in comparison with when the cleaning device 100 does not include the relay coil 101. Further, by varying the location of the cleaning device 100 relative to the bathroom cabinet unit 70, the position of the cleaning device 100 is varied relative to the primary coil 80. This decreases the degree of freedom for the location of the cleaning device 100.

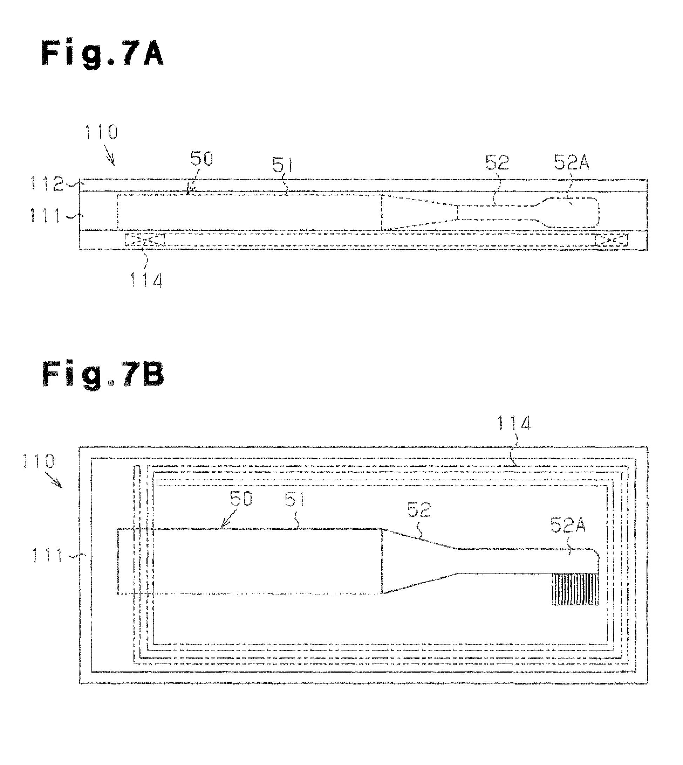

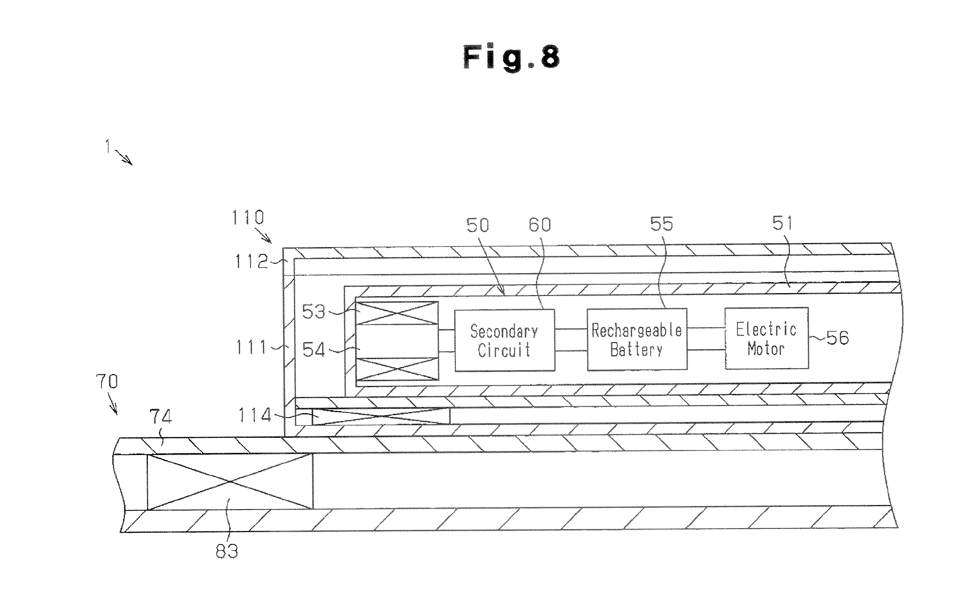

A third embodiment of the non-contact power transmission device 1 will now be described with reference to Figs. 7 and 8. The non-contact power transmission device 1 of the third embodiment mainly differs from the second embodiment of the non-contact power transmission device 1 shown in Fig. 5 in the points that will now be described. The second embodiment of the non-contact power transmission device 1 includes the electric shaver 90 and the cleaning device 100. In the third embodiment, the power receiver is incorporated in the electric toothbrush 50 and a storage case 110. The differences of the third embodiment of the non-contact power transmission device 1 from the second embodiment of the non-contact power transmission device 1 will now be described in detail. Same reference numerals are given to those components that are the same as the corresponding components of the second embodiment. Such components will not be described.

The structure of the storage case 110 will now be described with reference to Fig. 7.

As shown in Fig. 7A, the storage case 110 includes a main body case 111, which stores the electric toothbrush 50, and a lid 112, which opens and closes the main body case 111. The storage case 110 includes a relay coil 114, which is linked with the primary coil 80 of Fig. 5, and a capacitor (not shown), which is connected in series to the relay coil 114. The storage case 110 corresponds to a "case including a relay coil that relays the flow of magnetic flux from the primary coil of the power transmitter in the non-contact power transmission device to the secondary coil of the power receiver."

The storage case 110 has a size that allows for the storage case 110 to be set on the countertop 74 and the shelf 76. Further, the storage case 110 is formed to allow for the position on the bathroom cabinet unit 70 to be varied relative to the primary coil 80. That is, the storage case 110 is formed so that the user can hold the storage case 110 during normal use.

As shown in Fig. 7B, the relay coil 114 is arranged in the peripheral portion of the main body case 111. Further, the relay coil 114 is a planar coil that is tetragonal as viewed from above Each side of the relay coil 114 has a smaller size than each side of the primary coil 80 and each side of the relay coils 81 to 83.

The relay coil 114 and the capacitor form a resonance circuit. The capacitor has a capacitance that is set so that the resonance frequency of the resonance circuit conforms to the reference frequency FK.

The relay coil 114 is not connected to the primary circuit 30 of the bathroom cabinet unit 70 shown in Fig. 3 and the secondary circuit 60 of the electric toothbrush 50. The storage case 110 does not include an electric circuit. Accordingly, the relay coil 114 is not connected to other electric circuits. This decreases the impedance of the relay coil 114 compared to when the relay coil 114 is electrically connected to other electric circuits.

The relationship of the primary coil 80 and the relay coil 114 will now be described.

When the electric toothbrush 50 is stored in the main body case 111, the secondary coil 53 of the electric toothbrush 50 is arranged closer to the outer portion of the relay coil 114 than the center of the relay coil 114.

A power transmission method of the non-contact power transmission device 1 will now be described with reference to Figs. 3 and 8. The method for generating alternating power and alternating magnetic flux from the primary coil 80 to the third relay coil 83 is similar to the second embodiment and will not be described. Further, the method for supplying power from the secondary coil 53 of the electric toothbrush 50 to the rechargeable battery 55 is similar to the first embodiment and will not be described
(A) The relay coil 114 of the storage case 110 is linked with the alternating magnetic flux of the third relay coil 83 to generate alternating power of the reference frequency FK and the alternating magnetic flux.
(B) The secondary coil 53 of the electric toothbrush 50 is linked with the alternating magnetic flux of the relay coil 114 to generate alternating power of the reference frequency FK and the alternating magnetic flux.

The third embodiment of the non-contact power transmission device 1 has advantages (1), (2), and (5) of the non-contact power transmission device 1 of the first embodiment and advantage (6) of the non-contact power transmission device 1 of the second embodiment.

The present invention includes embodiments that differ from the first to third embodiments. Other embodiments of the present invention will now be described as modified examples of the embodiments. The modified examples described below may be combined with one another.

The bathroom cabinet unit 70 of the first embodiment includes the central magnetic sheet 27, the left magnetic sheet 28, and the right magnetic sheet 29. At least one of the central magnetic sheet 27, the left magnetic sheet 28, and the right magnetic sheet 29 is omitted in a modified example of the bathroom cabinet unit 70.

The doors 12 to 14 in the first embodiment include the third to sixth relay coils 23 to 26. In a modified example, one to three of the third to sixth relay coils 23 are omitted from the doors 12 to 14. In a further modified example, the doors 12 to 14 include one or more relay coils in addition to the third to sixth relay coils 23 to 26. It is only necessary that each of the doors 12 to 14 includes at least one relay coil.

In the first embodiment, each of the relay coils 21 to 26 is not connected to another electric load. Further, the relay coils 81 to 83 of the second and third embodiments are not connected to another electric load. In a modified example, at least one of the relay coils 21 to 26 is connected to another electric load. In such a configuration, when a light emitting diode serves as the other electric load, the linkage of magnetic flux with the relay coils 21 to 26 or the relay coils 81 to 83 lights the light emitting diode.

If the power transmission control unit 32 of the bathroom cabinet unit 70 in the first embodiment detects the power switch 18 is activated when detecting that one of the doors 12 to 14 is open, the power transmission control unit 32 supplies the primary coil 20 with power. When at least one of the doors 12 to 14 is open, the power transmission control unit 32 of the bathroom cabinet unit 70 in a modified example stops supplying power to the primary coil 20.

The bathroom cabinet unit 70 in the second and third embodiments includes the first relay coil 81 and the second relay coil 82. In the bathroom cabinet unit 70 of a modified example, at least one of the first relay coil 81 and the second relay coil 82 is omitted.

The first to third relay coils 81 to 83 in the second and third embodiments are located in the bathroom cabinet unit 70. In a modified example, at least one of the first relay coils 81 to the third relay coils 83 is independent from the bathroom cabinet unit 70. In this case, the position of at least one of the first to third relay coils 81 to 83 may be freely varied relative to the bathroom cabinet unit 70.

The cleaning device 100 in the second embodiment includes a single relay coil 101. In a modified example, the cleaning device 100 includes a plurality of relay coils 101.

The storage case 110 in the third embodiment includes the relay coil 114 in the main body case 111. In a modified example, the storage case 110 includes the relay coil 114 in the main body case 111 and the lid 112.

In the first and third embodiments, the secondary coil 53 of the electric toothbrush 50 is formed as a cylindrical coil. In a modified example, the secondary coil 53 of the electric toothbrush 50 is formed as a planar coil.

In the second embodiment, the secondary coil 53 of the electric shaver 90 is formed as a cylindrical coil. In a modified example, the secondary coil 53 of the electric shaver 90 is formed as a planar coil that extends in the longitudinal direction of the electric shaver 90.

In the first to third embodiments, the bathroom cabinet units 10 and 70 respectively include a single primary coil 20 and a single primary coil 80. In a modified example, the bathroom cabinet units 10 and 70 respectively include a plurality of primary coils 20 and a plurality of primary coils 80.

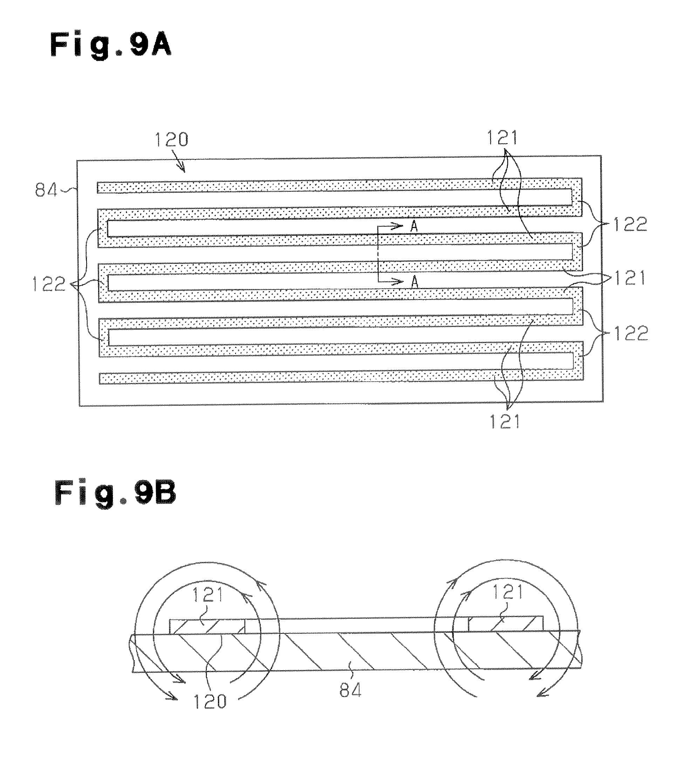

In the first to third embodiments, the bathroom cabinet units 10 and 70 respectively include the primary coils 20 and 80. In a modified example, the bathroom cabinet units 10 and 70 each include a primary coil 120 that is shown in Fig. 9.

As shown in Fig. 9A, the primary coil 120 includes a plurality of parallel straight portions 121 and a plurality of connection portions 122, which connect the ends of adjacent ones of the straight portions 121 and extend in a direction orthogonal to the straight portions 121.

As shown in Fig. 9B, current flows through each straight portion 121 of the primary coil 120 in a direction opposite to the adjacent straight portion 121. This strengthens the magnetic fluxes generated at the adjacent straight portions 121. The non-contact power transmission device including the primary coil 120 of Fig. 9 has the advantages described below.

In a planar coil that is circular as viewed from above, a conductive wire is stacked in the radial direction. Thus, when manufacturing the coil manually or with a winding machine, it is desirable that the shape of curved portions be maintained to obtain a uniform contact condition throughout the coil between adjacent portions of the conductive wire in the radial direction. In contrast, the primary coil 120 is formed by a plurality of straight portions 121 and a plurality of connection portions 122. That is, unlike a planar coil having the circular shape described above, the primary coil 120 does not include a spiral portion.

Thus, when manufacturing the primary coil 120, there is no need to maintain the shape of curved portions to obtain a uniform contact condition throughout the coil between adjacent portions of the conductive wire. That is, in comparison with a planar coil having the circular shape, the accuracy required for manufacturing is lowered. This facilitates manufacturing.

A modified example of the primary coil 120 shown in Fig. 9 includes a portion having an undulated shape, an accordion shape, or an arcuate shape. That is, the primary coil 120 of the modified example includes a non-spiral shape. A non-spiral wiring includes any planar coil wiring other than one having a spiral shape as viewed from above. The spiral shape includes a shape having a plurality of annular portions formed in a conductive wire. The annular portion may include a circular shape, a shape similar to the circular shape, a polygonal shape, and a shape similar to the polygonal shape.

The electric toothbrush 50 or the electric shaver 90 in the first to third embodiments includes the rechargeable battery 55. In a modified example, the rechargeable battery 55 is omitted from the electric toothbrush 50 or the electric shaver 90. The electric toothbrush 50 or the electric shaver 90 directly supplies current from the secondary coil 53 to the electric motor 56. In the bathroom cabinet units 10 and 70 corresponding to this structure, power is transmitted to the electric toothbrush 50 and the electric shaver 90 when the electric motor 56 is driven.

In the present invention, the power receiver may be incorporated in a device other than the electric toothbrush 50 illustrated in the first embodiment. Examples of such a device include an electric shaver, a nose hair cutter, a dryer, and the like. A power receiver incorporated in such a device includes a structure based on that of the first embodiment and has the same advantages as the first embodiment.

In the present invention, the power transmitter may be incorporated in a device other than the bathroom cabinet unit 70 illustrated in the second and third embodiments. Examples of such a device include a kitchen or the like. A power transmitter incorporated in such a device includes a structure based on that of the first embodiment and has the same advantages as the first embodiment.

## Claims

1. A non-contact power transmission device comprising:
a power transmitter including a primary coil;
a power receiver including a secondary coil; and
a relay coil that allows for movement relative to the primary coil and the secondary coil.

2. The non-contact power transmission device according to claim 1, wherein the relay coil is not connected to an electric load.

3. The non-contact power transmission device according to claim 1 or 2, wherein
the power transmitter is incorporated in a bathroom cabinet unit including a storage portion that allows for storage of the power receiver and a door portion that opens and closes the storage portion, and
the relay coil is incorporated in the door portion.

4. The non-contact power transmission device according to claim 3, comprising a position detector that detects a position of the door portion relative to the storage portion of the bathroom cabinet unit.

5. The non-contact power transmission device according to claim 3 or 4, wherein
the door portion includes a door that is movable relative to the storage portion, and
the non-contact power transmission device comprises a magnetic body located between the door and the relay coil.

6. The non-contact power transmission device according to any one of claims 3 to 5, wherein
the power transmitter includes a control unit that controls power supplied to the primary coil, and
the control unit supplies the primary coil with a larger power when the door portion closes the storage portion than when the door portion opens the storage portion.

7. A case of a power receiver corresponding to a power transmitter of a non-contact power transmission device, the case comprising a relay coil, wherein the case is formed to allow for storage or holding of the power receiver and to allow for movement relative to the power transmitter.
